# EUROPEAN PATENT APPLICATION

(11) **EP 1 946 835 A1**
(43) Date of publication of application: **23.07.2008**
(21) Application number: 06256434.9
(22) Date of filing: 19.12.2006
(51) Int. Cl.: B01J 23/36, B01J 23/75, C10G 2/00

(54) **Fischer-Tropsch catalyst**

(71) Applicant: BP EXPLORATION OPERATING COMPANY LIMITED, Sunbury-on-Thames, Middlesex TW16 7BP (GB)
(72) Inventor: The designation of the inventor has not yet been filed
(74) Representative: De Kezel, Eric

(57) **Abstract**

A composition for use as a catalyst or catalyst precursor for the conversion of synthesis gas to hydrocarbons said composition comprises (i) cobalt either as the elemental metal, oxide or a compound thermally decomposable to the elemental metal or oxide and (ii) zinc in the form of the oxide or a compound thermally decomposable to the oxide and (iii) rhenium in elemental form or in the form of a compound *characterised in that* the rhenium metal is present in the composition in amount in the range 0.0001 to 2.00 % w/w.

The compositions show improved activity over a wide temperature range than prior art compositions.

## Description

The present invention relates to a composition for use after reductive activation as a catalyst for the conversion of gaseous mixtures principally comprising carbon monoxide and hydrogen, hereinafter to be referred to as synthesis gas, to hydrocarbons, in particular to hydrocarbons in the C5-C120 range, to processes for producing the catalyst and to a process utilising the catalyst in the conversion of synthesis gas to the aforesaid hydrocarbons.

The conversion of synthesis gas into hydrocarbons by the Fischer-Tropsch process has been known for many years but the process has only achieved commercial significance in countries where unique economic factors prevail. The growing importance of alternative energy sources such as coal and natural gas has focussed renewed interest in the Fischer-Tropsch process as one of the more attractive direct and environmentally acceptable routes to high quality transportation fuels.

Many metals, for example cobalt, nickel, iron, molybdenum, tungsten, thorium, ruthenium, rhenium and platinum are known to be catalytically active, either alone or in combination, in the conversion of synthesis gas into hydrocarbons and oxygenated derivatives thereof. Of the aforesaid metals, cobalt, nickel and iron have been studied most extensively. Generally, the metals are used in combination with a support material, of which the most common are alumina, silica and carbon.

The use of cobalt as a catalytically active metal in combination with a support has been described in, for example, EP-A-127220, EP-A-142887, GB-A-2146350, GB-A-2130113 and GB-A-2125062. EP-A-127220, for example discloses the use of a catalyst comprising (i) 3-60 pbw cobalt, (ii) 0.1-100 pbw zirconium, titanium, ruthenium or chromium, per 100 pbw silica, alumina or silica-alumina, (iii) the catalyst having been prepared by kneading and/or impregnation.

Our earlier patent EP 261870 describes a composition for use after reductive activation as a catalyst for the conversion of synthesis gas to hydrocarbons comprising as essential components (i) cobalt either as the elemental metal, oxide or a compound thermally decomposable to the elemental metal or oxide and (ii) zinc in the form of the oxide or a compound thermally decomposable to the oxide. The resultant catalysts, in contrast to many prior art cobalt-containing catalysts, are more selective to hydrocarbons in the C5-C120 range and can be very selective to a waxy hydrocarbon product. These catalysts may also contain in elemental form or oxide form one or more of the following metals as promoters: chromium, nickel, iron, molybdenum, tungsten, zirconium, gallium, thorium, lanthanum, cerium, ruthenium, rhenium, palladium or platinum suitably in amount up to 15% w/w. Exemplified compositions included chromium, zirconium, gallium and ruthenium as promoters.

USP 4,826, 800 describes a process for preparing a catalyst comprising cobalt and zinc oxide for use after reductive activation as a catalyst in the conversion of synthesis gas to hydrocarbons. The catalyst is prepared by mixing a solution, of a soluble zinc salt and a soluble cobalt salt with a precipitant such as ammonium hydroxide or ammonium carbonate and recovering the precipitate. The ratio of carbonate to metal is high in the described method, which has been found detrimental to the strength of the catalyst.

USP 5,345, 005 relates to a Cu-Zn catalyst on alumina for the preparation of alcohols by hydrogenation of e.g. a ketone. In a comparative example, the preparation of a Cu-Zn-Co catalyst on alumina is described, wherein use is made of soda ash. However, the use of soda ash is found to be potentially detrimental to the strength of the catalyst. The particle size distribution range within which 90 % of the volume of the Cu-Zn-Co catalyst described in USP 5,345, 005 lies, is not specified. It is however expected that the use of soda ash in the preparation of the catalyst leads to a broadening in the particle size distribution.

US-A-5,945, 458 and. US-A-5,811, 365 describe a Fischer-Tropsch process in the presence of a catalyst composition of a group VIII metal, eg. cobalt, on a zinc oxide support. Such a catalyst is made by first preparing the support by adding a solution of zinc salt and other constituents to an alkaline bicarbonate solution. Next, the precipitate is separated from the bicarbonate solution by filtration to form a filter cake, which can thereafter be dried, calcined and loaded with the group VIII metal. The catalyst material is then formed into tablets, which tablets are crushed to form particles with a size of 250-500 µm, that can be used in a Fischer-Tropsch process. Additional post-treatments such as crushing, are required in order to obtain a catalyst powder with good strength properties. However, the obtained average particle size, as indicated above, is still relatively large. Moreover, crushing results in a broad particle size distribution and catalysts with such a large particle size and a broad particle size distribution tend to be less suitable for processes involving a bubble column, a slurry phase reactor or a loop reactor.

WO-A-01/38269 describes a three-phase system for carrying out a Fischer-Tropsch process wherein a catalyst suspension in a liquid medium is mixed with gaseous reactants in a high shear mixing zone, after which the mixture is discharged in a post mixing zone. Thus mass transfer is said to be enhanced. As suitable catalysts inter alia cobalt catalysts on an inorganic support, such as zinc oxide are mentioned. The surface area of the support used for the preparation of these known catalysts is less than 100g/m2. These prior art cobalt based catalysts can be prepared by depositing cobalt on a suitable support, such as a zinc oxide support, by impregnation methodology. Other conventional preparation methods include precipitation routes, which typically involve crushing of a hard filter cake of catalyst material, resulting from the catalyst preparation process, into small particles.

More recently WO 03/090925 describes a Fischer-Tropsch catalyst comprising particles of a cobalt and zinc co-precipitate having specific volume average particle size and particle size distributions. The catalysts essentially consist of cobalt and zinc oxide but may also contain other components commonly employed in Fischer-Tropsch catalysts such as ruthenium, hafnium, platinum, zirconium, palladium, rhenium, cerium, lanthanum, or a combination thereof. When present such promoters are typically used in a cobalt to promoter atomic ratio of up to 10:1.

EP 221598 describes supported catalysts comprising a metal component of iron, nickel or cobalt promoted by zirconium and in addition a noble metal from Group VIII of the Periodic Table. The catalysts are suitable for the preparation of hydrocarbons from carbon monoxide and hydrogen. Preferred noble metals include platinum or palladium and the catalysts are most suitably supported on silica or alumina.

Fischer Tropsch catalysts generally need to be activated by reduction before becoming the actual active catalyst. The activation of such catalysts in practice is generally done with a hydrogen containing gas, often diluted with an inert gas such as nitrogen. The reduction of metal-oxides by a hydrogen containing gas is an exothermic reaction. In large scale reductions as in a commercial Fischer Tropsch plant it is sometimes difficult to control due to heat transfer limitations in a gas solid reaction, this lack of control may lead to a run-away reaction where the heat released by the reduction reaction further accelerates the reaction rate. Such run-away reactions can damage the catalyst by (local) exposure to extreme temperatures

We have now surprisingly found that compositions comprising cobalt and zinc have improved activity over a wide temperature range compared to prior art compositions for the conversion of synthesis gas to hydrocarbons when promoted by rhenium in elemental form or in compound form.

The addition of a rhenium promoter to the Co-ZnO catalyst also allows reduction of the catalyst over a wider temperature range without detrimental effect on the catalyst activity. Also the rhenium promoter not only results in the increase of catalyst activity, it also helps to counter the effect of exothermic run-away reduction reactions which might otherwise damage the catalyst.

Thus according to a first aspect of the present invention there is provided a composition for use as a catalyst or catalyst precursor for the conversion of synthesis gas to hydrocarbons said composition comprising (i) cobalt either as the elemental metal, oxide or a compound thermally decomposable to the elemental metal or oxide and (ii) zinc in the form of the oxide or a compound thermally decomposable to the oxide and (iii) rhenium in elemental form or in the form of a compound *characterised in that* the rhenium metal is present in the composition in amount in the range 0.0001 to 2.00 % w/w.

Preferably the rhenium metal is present in amount in the range 0.0001 to 1.50 % w/w.

Suitably the composition may contain up to 70% cobalt, preferably up to 40% cobalt and most preferably up to 25% cobalt, the remainder of the composition being zinc, oxygen and rhenium, the percentages being based on an atomic basis.

The rhenium promoter is typically used in a cobalt to promoter atomic ratio of up to 250:1 and more preferably up to 125:1 and most preferably up to 25:1.

The composition may be prepared by a variety of methods including impregnation, precipitation or gelation.

The novel catalysts and catalyst precursors of the present invention may suitably be prepared by co-precipitation of cobalt and zinc ions, wherein an acidic solution comprising zinc ions and cobalt ions and an alkaline solution are supplied to a reactor comprising an aqueous medium, preferably water or an aqueous solution, wherein the acidic solution and alkaline solution are contacted in the aqueous medium and a precipitate comprising cobalt and zinc is formed. The precipitate is thereafter separated from the aqueous medium (which may have formed a slurry together with the precipitate). The separated cobalt and zinc comprising precipitate is then dried and may be post-treated, e.g. calcined, etc., to form said catalyst.

The rhenium may be added at one or more of the catalyst preparation stages such as during the co-precipitation as a soluble compound, following the co-precipitation by incipient wetness impregnation or following the post treatment of the cobalt and zinc comprising precipitate.

The combination of acidic solution and alkaline solution is preferably chosen such that the components of the acidic solution and of the alkaline solution are soluble in the aqueous medium, but that the cobalt and zinc precipitate when they are contacted with the alkaline solution, while the counter ions of zinc, cobalt and optionally the counter ions of rhenium substantially remain in solution. The skilled professional will know how to choose appropriate conditions, such as the type of counter ions and the concentrations for each of the components.

Preferably the precipitation of particles is carried out at a substantially constant pH, in particular at a pH value varying at most 0.2 pH units around a set-point value. Thus it has been found possible to make a catalyst precursor with very favourable free flowing characteristics.

Preferably, the alkaline solution and the acidic solution are supplied to the reactor simultaneously (from separate conduits).

The catalyst or catalyst precursor may alternatively be obtained by impregnation of a suitable cobalt and rhenium compound either in a single impregnation or using multiple impregnation steps.

Optionally the cobalt in the isolated and dried precipitate or in the calcined product is reduced to metallic cobalt.

Suitable sources for ionic zinc and ionic cobalt include salts thereof that are soluble in the acidic solution and in water in a sufficient concentration. Preferred examples of such salts include zinc nitrate, cobalt nitrate, zinc acetate, cobalt acetate and other inorganic or organic salts of cobalt and zinc that have a similar solubility in the acidic solution.

Suitable components for co-precipitating with the cobalt ions and zinc ions present are inorganic salts and organic salts that are soluble in an aqueous alkaline solution in a sufficient concentration, such as hydroxides, carbonates, urea, isocyanates and any other salt that can be used as base source and that can be dissolved in the alkaline solution. Preferred examples of such salts include ammonium carbonate, ammonium bicarbonate and other inorganic or organic salts of carbonate that have at least a similar solubility in the alkaline solution.

Preferably, the total concentration of zinc and cobalt ions in the aqueous medium is chosen in the range of 0.1 to 5 moles/litre. The concentration is preferably kept within this range throughout the precipitation step.

The pH of the acid solution is preferably in the range of 1-5. The pH of the alkaline solution is preferably in the range of 6-14. The pH in the aqueous medium (wherein the co-precipitation takes place) is preferably in the range of 4-9, depending upon the type of precursor salts used as a source for cobalt, zinc and alkaline component (s).

The temperature during the co-precipitation process is preferably chosen in the range of 5-98 C, more preferably in the range of 15-75 C.

Irrespective of whether the composition is prepared by impregnation, precipitation or co-precipitation or by any other method, it is preferred to carry out one or more additional steps before the composition is used as a catalyst. Thus it is preferred to calcine the composition, suitably by heating it in, for example, a stream of gas such as nitrogen or air at a temperature suitably in the range from 250 to 600 °C.

The rhenium metal promoter may be introduced at any stage in the production of the composition, for example during the precipitation step or post-impregnation.

The rhenium metal may be introduced into the catalyst precursor in elemental form or in the form of a compound. Suitable rhenium precursor-containing compounds include for example HReO₄, (NH₄)ReO₄, ReCl₃, Re₂(CO)₁₀, ClRe(CO)₅, ReO₂, Re₂O₅, ReOCl₄ and similar. The rhenium precursor-containing compound is preferably soluble in water but alternatively may be soluble in an organic solvent.

The catalyst compositions may suitably be activated by reduction for example by contact at elevated temperature with a reducing gas, for example hydrogen, which may be diluted with an inert gas such as nitrogen. Typically the conditions employed during the reductive activation step may suitably be at a pressure in the range from 1 to 100 bar and a temperature in the range 150°C to 500°C for a period of up to 24 hours or longer.

Although it is preferred to effect the reductive activation step as a discrete step prior to use as a catalyst for the conversion of synthesis gas it may be incorporated into the synthesis gas conversion process.

In another aspect the present invention there is provided a process for the conversion of synthesis gas to hydrocarbons which process comprises contacting synthesis gas under conditions of elevated temperature and atmospheric or elevated pressure with a reductively activated catalyst composition as hereinbefore described.

Synthesis gas principally comprises carbon monoxide and hydrogen and possibly also minor amounts of carbon dioxide, nitrogen and other inert gases depending upon its origin and degree of purity. Methods of preparing synthesis gas are established in the art and usually involve the partial oxidation of a carbonaceous substance, e.g. coal. Alternatively, synthesis gas may be prepared, for example by the catalytic steam reforming of methane. For the purpose of the present invention the carbon monoxide to hydrogen ratio may suitably be in the range from 2:1 to 1:6. Whilst the ratio of the carbon monoxide to hydrogen in the synthesis gas produced by the aforesaid processes may differ from these ranges, it may be altered appropriately by the addition of either carbon monoxide or hydrogen, or may be adjusted by the so-called water gas shift reaction well known to those skilled in the art.

The elevated temperature may suitably be in the range from 160 to 350 °C, preferably from 180 to 250 °C. The pressure may suitably be in the range from 0 to 100 bar, preferably from 10 to 50 bar. The GHSV for continuous operation may suitably be in the range from 100 to 25000 L/L/h.

The process may be carried out batch wise or continuously in a fixed bed, fluidised bed or slurry phase reactor.

When using the catalyst in a fixed bed process the particle size should be of such shape and dimension that an acceptable pressure drop over the catalyst bed is achieved. A person skilled in the art is able to determine the particle dimension optimal for use in such fixed bed reactors. Particles of the desired shape and dimension may be obtained by extrusion of a slurry to which optionally extrusion aids and/or binders may be added.

Thus the present invention further relates to the use of a catalyst according to the invention in a slurry reactor, a loop reactor or a fluid bed reactor. The present invention further relates to the use of a catalyst according to the invention in a Fischer-Tropsch process.

The present invention will now be illustrated by use of the following examples.

### Examples

### Catalyst synthesis

The promoted catalysts were prepared according to the following general method as follows:

### Base Co-ZnO catalyst preparation

The general preparation procedure for the co-precipitated Co-ZnO catalyst precursors is as follows

The required amount of each reagent was weighed into a clean beaker. An amount of de-ionized water was added and stirred with a clean glass rod until the reagent was totally dissolved. When the temperature of the solution in the beaker reached room temperature, the solution was poured from the beaker to a volumetric flask. The inner walls of the beaker and the glass rod were washed with de-ionized water (or other solvent) at least three times, and the washing solution was transferred to the volumetric flask. The volumetric flask was thoroughly shaken. De-ionised water was added to the volumetric flask to the graduated mark. The solution was transferred to a labeled solution bottle and the total weight of the bottle and the solution was recorded.

The nominal concentration of Zn(NO₃)₂•6H₂O was 0.67M/L, and pH=3.50±0.05. The nominal concentration of Co(NO₃)₂•6H₂O was 0.34M/L, and pH=5.75±0.05. The Zn(NO₃)₂•6H₂O solution, the Co(NO₃)₂•6H₂O solution and de-ionised water were mixed to prepare a solution of Zn(NO₃)₂•6H₂O and Co(NO₃)₂•6H₂O. The nominal concentrations of Zn(NO₃)₂•6H₂O and Co(NO₃)₂•6H₂O in 900 ml of the combined solution was 0.410M/L (109.74 gr) and 0.100M/L (26.18 gr), respectively, and pH = 4.00.

Of the mixed solution, a weight of 690.8g (approximately 900ml) was measured for each co-precipitation. NH₄HCO₃ was dissolved in de-ionised water to prepare an aqueous solution of NH₄HCO₃, the nominal concentration of NH₄HCO₃ was 1.36M/L (194 gr in 1800 ml). A total of 1800ml of the base solution was used for each co-precipitation. The base was added at a rate of 30 ml/min while stirring at 500 rpm to the metal solution to give a pink precipitate. The precipitate was isolated by centrifugation of approximately 500ml volumes at 3000rpm for 2 minutes.

A watch glass with the co-precipitated catalyst sample was placed in an oven and dried at 80°C for about 8 h. The sample was ground into a fine powder and the powder was further dried at 150°C for 16 h.

### Catalyst Calcination

The obtained catalyst precursors were calcined according to the following procedure.

Weighted catalysts (about 11 g) were placed into calcination tubes made of pyrex glass. The air flow rate was set at 375 ml/min for each calcinations tube and the tube flushed for 30 minutes. The furnace was heated at 2°C/min from room temperature to 450°C while maintaining the air flow rate at 375 ml/min. The temperature was held at 450°C for six hours while maintaining the air flow rate at 2500ml/min. The oven was left to cool to room temperature with the air flow rate set at 1000ml/min. The obtained catalysts were discharged from the tube furnace to sealed bottles.

### Catalyst impregnation

Promoted catalysts were prepared according to the following method. Water uptake of the catalyst precursor to be impregnated was determined as follows. A weighted amount of Co-ZnO catalyst precursor obtained by co-precipitation after drying (W1) was taken. De-ionized water was added to the beaker, while stirring the sample, until the Co-ZnO was fully wetted, but there was no more liquid remaining; the weight of the wetted sample and beaker was determined (W2). The water adsorption ratio was determined to be (W2/W1) X 100%

A weighted promoter compounds was dissolved in de-ionised water which was calculated based on the water adsorption ratio and the amount of Co-Zn catalyst precursor. The Co-ZnO catalyst precursor was added to the promoter solution while stirring with a glass rod. After the impregnated carrier had been stirred at room temperature for 5 minutes, the impregnated carrier was dried under an infrared lamp, while stirring until the material was completely dry.

The table below gives the promoter precursors and weights of promoter precursors used to prepare the promoted catalysts.

| | Catalyst A | Catalyst B |
|---|---|---|
| | | |
| Precursor^{(a)} | HReO₄ | HReO₄ |
| Metal (w/w)^{(b)} | 0.766 | 0.766 |
| Amount (g)^{(c)} | 0.303 | 0.758 |
| Metal used (g)^{(d)} | 0.232 | 0.581 |
| Metal used (mmol)^{(e)} | 1.25 | 3.12 |
| Promoter (mmol/100g)^{(f)} | 2.70 | 6.75 |
| Promoter (%w/w)^{(g)} | 0.50 | 1.26 |

All impregnations were done on 62.5 grams of un-calcined base catalyst. (a) The Re precursor used was dissolved in water to obtain the stock solution, (b) Metal content in %w/w in the precursor solution used to make the stock solution.. (c) Amount of precursor solution used. (d) Amount of promoter metal (calculated to be present as elemental metal) used for the impregnation. (e) mmol of metal used for the impregnation. (f) mmol of Re metal in the calcined catalyst precursor, calculated based on a reduction to 74% of the initial catalyst precursor weight after calcinations. (g) Weight percentages are calculated based on promoter metal on un-reduced Co-ZnO precursor after calcination.

### Catalyst pressing

The catalyst powders were pressed into pellets at a pressure of 6 ton on a die with a diameter of 32mm for 5 min. The obtained pellet were crushed, sieved, and the 20-40 mesh grains were collected for catalytic testing.

### Experimental conditions

Catalysts were loaded in a fixed bed testing reactor as diluted catalysts. The bed dilutions were used to control exotherms in the catalyst. The bed dilutions used were Diluent / Catalyst = 8/1 (GHSV = 2500/hr). Total catalyst bed volumes were 2ml (including the diluent).

The catalysts were activated using the following procedure:

Drying: N₂ at GHSV = 2000 L/L/hr at P=latm was passed over the catalyst bed while the temperature was raised from room temperature to 120C with a ramp rate of 300C/hr. At 120C the temperature was held for 15mins.

Activation: A mixture of 50/50 %v/v H₂/N₂ was passed over the catalyst bed at GHSV = 3600 L/L/hr, at P=1atm, the temperature was raised from 120C to 260C with a ramp rate of 180C/hr at the target temperature the temperature was held for 15 hours before cooling to 90C.

Syngas: At 90C the H₂/N₂ mixture was replaced by a syngas mixture of composition 55.5/26.5/18 = H₂/CO/He at a flow of GSHV = 2500 L/L/hr and P=30bar the temperature was raised from T=90C to T=170C at a ramp rate of 30C/hr the ramp rate was then reduced to 5C/hr and further reduced to a ramp rate of 2C/hr for the last 4C.

Each catalyst was tested at two temperatures (T = 180C and T =195C) for a duration of 150 hours. Exit gasses were sampled by on-line GC and analysed for gaseous products. The He was used as an internal standard, the C₅₊ productivity is determined by difference from the C₁-C₄ components in the gas phase.

### Catalyst Activity

The enclosed Figures below represent a comparison between the catalysts of the invention and a reference catalyst. Addition of Re as a promoter to Co-ZnO increases the catalyst activity significantly. The figures below show the increased CO Conversion for the Re-promoted catalysts relative to a reference catalyst under the same testing conditions.

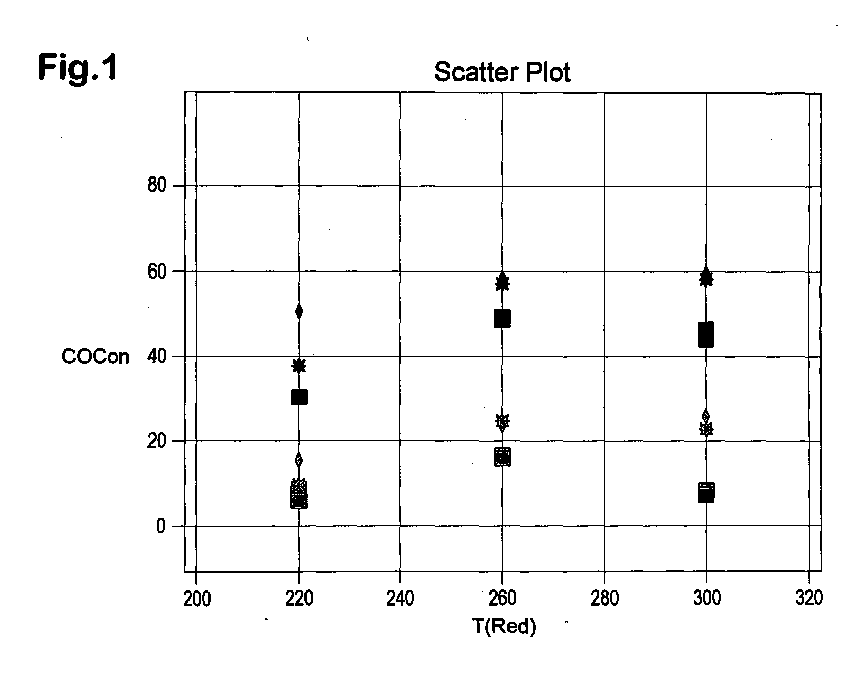

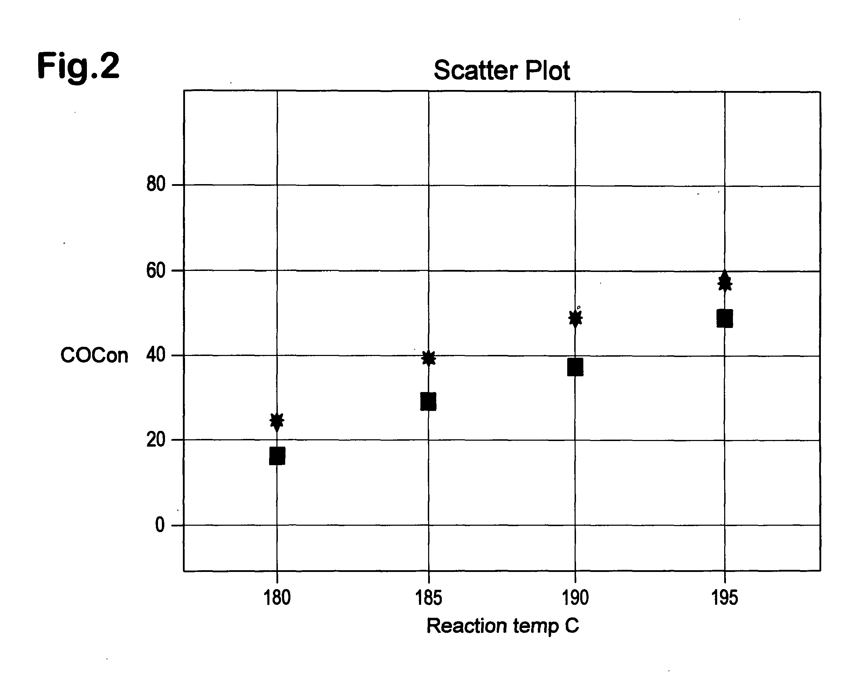

Figure 1 shows the increased activity of the catalysts of the invention as a function of reduction temperature and Figure 2 as a function of reaction temperature.

All examples used the following experimental conditions: the gas throughput was 2500L/L/hr, the pressure was 30bar, the feed gas composition was He/H₂/CO = 18/55.5/26.5 %v/v. Data points were taken at approximately 150HOS.

Figure 1 below compares two catalysts reduced at three different temperatures. The black symbols indicate a run temperature of 195C the grey symbols indicate a run temperature of 180C. The catalysts are indicated by the shape of the symbols: Square = un-promoted catalyst, Star = 0.50%w/w Re-promoted, Diamond = 1.26%w/w Re-promoted. It is clear that for all conditions the 1.26%w/w Re-promoted catalysts show better performance in terms of CO conversion, at the lower activation temperature of 220C the addition of 0.50%w/w Re-promoted catalyst shows little or no improvement in the catalyst activity.

The relative promoter effect of the Re-promoted catalyst precursor when reduced at 300C is seen to increase relative to that of the catalysts activated at 260C. While the absolute activity of the Re-promoted catalyst is similar at both activation temperatures the activity of the un-promoted catalyst is seen to drop.

Figure 2 below shows the increased activity of the Re-promoted catalysts (Star and Diamond) versus the un-promoted catalyst (Square) as a function of reaction temperature. The catalysts shown were reduced at 260C.

## Claims

1. A composition for use as a catalyst or catalyst precursor for the conversion of synthesis gas to hydrocarbons said composition comprising (i) cobalt either as the elemental metal, oxide or a compound thermally decomposable to the elemental metal or oxide and (ii) zinc in the form of the oxide or a compound thermally decomposable to the oxide and (iii) rhenium in elemental form or in the form of a compound ***characterised in that*** the rhenium metal is present in the composition in amount in the range 0.0001 to 2.00 % w/w.
